# EUROPÄISCHE PATENTSCHRIFT

(11) **EP 3 938 079 B1**
(45) Veröffentlichungstag und Bekanntmachung des Hinweises auf die Patenterteilung: **22.02.2023**
(21) Anmeldenummer: 20713164.0
(22) Anmeldetag: 12.03.2020
(51) Int. Cl.: B01J 20/08, B01J 20/18, B01J 20/20, B01J 20/28, B01J 20/34, B01D 53/047, B01J 20/32

(54) **VERFAHREN UND ANORDNUNG ZUR BEARBEITUNG EINES GASGEMISCHS**
METHOD AND ARRANGEMENT FOR PROCESSING A GAS MIXTURE
PROCÉDÉ ET DISPOSITIF DE TRAITEMENT D'UN MÉLANGE GAZEUX

(30) Priorität: 13.03.2019 EP 19020124; 24.05.2019 EP 19020342
(43) Veröffentlichungstag der Anmeldung: 19.01.2022
(73) Patentinhaber: Linde GmbH, 82049 Pullach (DE)
(72) Erfinder: KONTOGEORGOPOULOS, Eythymios, 80639 München (DE)
(74) Vertreter: Lu, Jing
(86) Internationale Anmeldenummer: PCT/EP2020/025123
(87) Internationale Veröffentlichungsnummer: WO 2020/182350

(56) Entgegenhaltungen:
- EP-A1- 2 198 946
- CN-B- 104 492 405
- FR-A1- 2 973 719
- US-A1- 2009 071 333
- US-A1- 2016 175 759

## Beschreibung

Die vorliegende Erfindung betrifft ein Verfahren zur Bearbeitung eines Gasgemischs durch Druckwechseladsorption, insbesondere durch Vakuumdruckwechseladsorption, und eine entsprechende Anordnung gemäß den Oberbegriffen der jeweiligen unabhängigen Patentansprüche.

### Stand der Technik

Die Herstellung von Luftprodukten in flüssigem oder gasförmigem Zustand, beispielsweise von Sauerstoff unterschiedlicher Aggregatzustände und Reinheitsgrade, durch Tieftemperaturzerlegung von Luft ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Gasförmiger Sauerstoff unterschiedlicher Reinheitsgrade kann alternativ zur Tieftemperaturzerlegung von Luft auch mittels Druckwechseladsorption (engl. Pressure Swing Adsorption, PSA), insbesondere mittels Vakuumdruckwechseladsorption (engl. Vacuum Pressure Swing Adsorption, VPSA) aus Luft gewonnen werden. Die VPSA unterscheidet sich von der normalen PSA insbesondere dadurch, dass die Desorption auf einem unteratmosphärischen Druckniveau erfolgt. Bei der VPSA können höhere Sauerstoffausbeuten bei geringerem Energieverbrauch erzielt werden. Zu Merkmalen und Vorteilen entsprechender Verfahren sei auf Fachliteratur verwiesen. Grundlagen zu Adsorptionsverfahren finden sich beispielsweise bei A. Gabelman, Adsorption Basics: Part 1, CEP Journal, Juli 2017, Seite 48 bis 53, und A. Gabelman, Adsorption Basics: Part 2, CEP Journal, August 2017, Seite 38 bis 45.

Die Zerlegung von Luft mittels PSA und VPSA beruht auf der unterschiedlich starken Adsorption der Luftkomponenten an ein Adsorbens. Mittels PSA oder VPSA können insbesondere sauerstoffreiche Gasgemische mit beispielsweise ca. 90 bis 95 Molprozent Sauerstoffgehalt aus Luft gewonnen werden.

Wenngleich die vorliegende Erfindung nachfolgend überwiegend auf die Bearbeitung von Luft mittels VPSA beschrieben wird, können die erfindungsgemäß vorgeschlagenen Maßnahmen grundsätzlich auch im Zusammenhang mit der Bearbeitung anderer Gasgemische als Luft durch VPSA verwendet werden. Die vorliegende Erfindung eignet sich insbesondere für stickstoffreiche Gasgemische mit einem Stickstoffgehalt von mehr als 40 Molprozent, ist aber nicht auf entsprechende Gasgemische beschränkt.

Die Adsorption erfolgt in einer PSA oder VPSA typischerweise unter Verwendung poröser Adsorbentien. Die in der PSA oder VPSA jeweils adsorbierenden Anteile der in einem gasförmigen Einsatzgemisch enthaltenen adsorbierbaren Komponenten hängen vom Druck des Einsatzgemischs und von der Selektivität des Adsorbens ab. Ein entsprechendes Einsatzgemisch wird daher einer Verdichtung unterworfen, bevor es der PSA oder VPSA zugeführt wird.

Zur Bearbeitung von Luft mittels PSA oder VPSA verwendete Adsorptionseinheiten umfassen in der Richtung der Durchströmung typischerweise zwei aufeinander folgende Adsorbenslagen bzw. Schüttungen oder Schüttungsabschnitte. Eine erste, vergleichsweise kurze Lage dient dabei zur Entfernung von Wasser und anderen stark adsorbierbaren Luftkomponenten, beispielsweise der üblichen Luftfeuchtigkeit und Spuren von Kohlendioxid. Dieser ersten Lage folgt in Strömungsrichtung eine zweite Lage, die zur Entfernung von Stickstoff dient. In der zweiten Lage bilden sich typischerweise, wie bei Adsorptionsverfahren üblich, eine Gleichgewichtszone (engl. Equilibration Zone) und eine sich der Gleichgewichtszone in Strömungsrichtung anschließende Stoffaustauschzone (engl. Mass Transfer Zone) an. Weitere Erläuterungen zur Ausbildung dieser Zonen finden sich beispielsweise bei Gabelman (s.o.) auf Seite 50 im Abschnitt "Mass transfer considerations".

Zur Adsorption können unterschiedliche Adsorbentien bzw. Adsorbensmaterialien (siehe auch unten) verwendet werden, wie ebenfalls aus der zitierten Fachliteratur bekannt. Entsprechende Adsorbensmaterialien können dabei beispielsweise in Form von Kugeln oder Pellets (nachfolgend vereinfacht als "Adsorptionskörper" bezeichnet) bereitgestellt werden, deren Durchmesser typischerweise zwischen 1 und 3 mm liegt. Dieser Durchmesser stellt eine der Haupteinflussgrößen auf die Trenncharakteristik einer entsprechenden Adsorptionseinheit dar.

Bei kleineren Durchmessern findet typischerweise ein verbesserter Massentransfer statt, allerdings bei einem vergleichsweise größeren Druckverlust über das Adsorbensmaterial. Größere Partikel verursachen geringere Druckverluste, zeigen aber eine schlechtere kinetische Leistungsfähigkeit. Daher ist die Wahl der Durchmesser der Adsorptionskörper typischerweise das Ergebnis eines Kompromisses zwischen Druckverlust und Adsorptionskinetik.

In jüngerer Zeit entwickelte weitere Formen von Adsorptionskörpern, insbesondere sogenannte Core-in-Shell-Kompositkörper, sollen den Massentransfer ohne negativen Einfluss auf den Druckverlust durch die Adsorptionseinheit verbessern. Bei Core-in-Shell-Kompositkörpern handelt es sich im Gegensatz zu klassischen Adorptionskörpern, die im Wesentlichen homogen aus dem porösen Adsorbensmaterial gebildet sind, um zusammengesetzte Adsorptionskörper mit einem inneren Kern aus einem (zumindest im Wesentlichen) nichtporösen, nichtadsorbierenden Material und einer äußeren, durch das jeweilige Adsorbensmaterial gebildeten Schicht. Es versteht sich, dass, wenn nachfolgend von einem "nichtporösen" und "nichtadsorbierenden" Material die Rede ist, ein derartiges Material eine geringfügige, jedoch gegenüber einem als "porös" und "adsorbierend" bezeichneten Material deutlich geringere Porosität und Adsorptionsfähigkeit aufweisen kann. In der Regel ist der innere Kern jedoch aus einem vollständig nichtporösen Material gebildet, beispielsweise einem Quarzkorn. Alternativ wird nachfolgend auch der Begriff "inerter" Kern verwendet.

Beispielsweise ist aus der EP 1 080 771 B1 ein Gastrennverfahren bekannt, umfassend das Zuführen eines gasförmigen Gemischs, das mindestens zwei Komponenten mit unterschiedlichen Adsorptionseigenschaften enthält, in einen Adsorptionsbehälter, der ein Bett aus mindestens einem Adsorptionsmittelmaterial enthält, das mindestens eine der gasförmigen Komponenten in dem gasförmigen Gemisch bevorzugt adsorbieren kann, und Unterwerfen des gasförmigen Gemischs unter Bedingungen, die es ermöglichen, die bevorzugt adsorbierbare gasförmige Komponente in dem gasförmigen Gemisch auf dem Adsorptionsmittelmaterial zu adsorbieren und von der nicht adsorbierten Komponente in dem gasförmigen Gemisch zu trennen, welches durch den Adsorptionsmittelbehälter gelangt, wobei mindestens ein Adsorptionsmittelmaterial in dem Adsorptionsmittelbehälter Kompositteilchen mit einem inneren festen undurchlässigen Kern, der aus einem nichtporösen nichtadsorbierenden Material besteht, und mindestens eine äußere, das Adsorptionsmittelmaterial enthaltenden Schicht enthält.

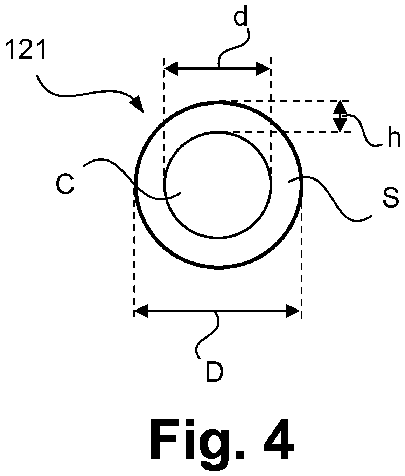

Ein entsprechender Kompositkörper ist in Figur 4 veranschaulicht, auf die bereits an dieser Stelle Bezug genommen werden soll. Weitere Erläuterungen finden sich weiter unten. Bei der Herstellung von Core-in-Shell-Kompositkörpern können der Partikeldurchmesser (D, siehe Figur 4) sowie die Stärke der äußeren Schicht (h) genau bestimmt werden. Dafür muss der Durchmesser (d) des inneren Kerns entsprechend gewählt werden. Auf diese Weise können Core-in-Shell-Kompositkörper produziert werden, die eine variable Stärke der äußeren Schicht bzw. ein variablesVolumenverhältnis zwischen dem Adsorptionsmaterial und dem Kern haben. Das dabei erzielte Massenverhältnis ist abhängig von der Dichte des Kerns. Das Volumenverhältnis ist eine konstante geometrische Größe und unabhängig von dem ausgewählten Material des Kerns. Daher wird nachfolgend der Begriff des "Körpervolumens" für einen entsprechenden Adsorptionskörper verwendet. Das Körpervolumen gibt dabei das von der äußeren Begrenzung der äußeren Schicht eingeschlossene Volumen eines entsprechenden Adsorptionskörpers (inklusive der gesamten äußeren und der gesamten inneren Schicht) an.

EP2198946 A1 offenbart Kompositadsorbentien mit "core-shell" Körpern zur Gastrennung.

Im Gegensatz zur Aufreinigung von anderen Gasgemischen, in denen nur Spuren an Verunreinigungen entfernt werden müssen, steht man bei der Bearbeitung von Luft bzw. vergleichbaren Gasgemischen zur Gewinnung von Sauerstoff vor der Herausforderung, dass die zu entfernende Komponente in hoher Konzentration vorliegt bzw. sogar die Hauptkomponente darstellt. Durch den hohen Stickstoffgehalt ist die sich in der oben erläuterten Lage zur Entfernung von Stickstoff ausbildende Gleichgewichtszone ausgesprochen groß, wohingegen die sich anschließende Stoffaustauschzone vergleichsweise kurz und durch steile Konzentrationsgradienten gekennzeichnet ist. Für die beiden Zonen ergeben sich hinsichtlich der jeweiligen Eigenschaften teilweise entgegengesetzte Zielsetzungen, die in herkömmlichen Verfahren aber nicht zufriedenstellend erfüllt werden können.

Die vorliegende Erfindung stellt sich daher die Aufgabe, in dieser Hinsicht verbesserte Möglichkeiten zur Bearbeitung von Gasgemischen, insbesondere von Luft, durch Druckwechseladsorption, insbesondere durch Vakuumdruckwechseladsorption, zu schaffen und die Nachteile des Standes der Technik zu überwinden.

### Offenbarung der Erfindung

Die genannte Aufgabe wird durch ein Verfahren zur Bearbeitung eines Gasgemischs, insbesondere eines stickstoffreichen Gasgemischs wie Luft, durch Druckwechseladsorption, insbesondere durch Vakuumdruckwechseladsorption, und eine entsprechende Anordnung gemäß den Oberbegriffen der jeweiligen unabhängigen Patentansprüche 1 und 15 gelöst.

Bevorzugte Ausgestaltungen sind Gegenstand der abhängigen Patentansprüche und der nachfolgenden Beschreibung.

Nachfolgend werden zunächst einige bei der Beschreibung der vorliegenden Erfindung und ihrer Vorteile verwendete Begriffe sowie der zugrunde liegende technische Hintergrund näher erläutert.

Ist hier von "einer PSA" bzw. "einer VPSA" die Rede, sei hierunter sowohl ein entsprechendes Verfahren bzw. ein entsprechender Verfahrensschritt, als auch eine zur Durchführung eines derartigen Verfahrens bzw. Verfahrensschritts ausgebildete technische Einrichtung, also eine Adsorptionseinheit, verstanden.

Das bei der PSA oder VPSA verwendete Adsorbens befindet sich in entsprechenden Adsorptionsbehältern, wobei für einen kontinuierlichen Produktionsbetrieb typischerweise zwei oder mehr Adsorptionsbehälter verwendet werden. Die Adsorptionsbehälter werden dabei abwechselnd in einem Adsorptionstakt mit der oder den zu adsorbierenden Komponenten aus dem gasförmigen, verdichteten Einsatzgemisch beladen und in einem Desorptions- bzw. Regenerationstakt regeneriert, wobei zwischen diesen beiden Takten auch jeweils zusätzliche Zeiträume liegen können, in denen weder eine Beladung noch eine Regeneration vorgenommen wird und das Adsorbens beispielsweise mit weiteren Gasströmen gespült werden kann, um Reste des zu trennenden Gasgemischs auszuführen.

In dem erwähnten Adsorptionstakt wird das Einsatzgemisch unter Druck durch den Adsorptionsbehälter geführt, bis das enthaltende Adsorbens keine ausreichende Aufnahmekapazität für die adsorbierte(n) Komponente(n) mehr aufweist. Die Zufuhr des zu bearbeitenden Gasgemischs wird daher unterbunden und durch eine Druckreduktion wird in dem Desorptionstakt eine Desorption der adsorbierte(n) Komponente(n) bewirkt. Die VPSA unterscheidet sich von einer herkömmlichen PSA, wie erwähnt, im Wesentlichen durch das im Desorptionstakt verwendete unteratmosphärische Druckniveau, das landläufig auch als "Vakuum" bezeichnet wird. Die VPSA zeichnet sich gegenüber einer herkömmlichen PSA in bestimmten Fällen, beispielsweise bei der Gewinnung von Sauerstoff aus Luft, durch erhöhte Ausbeuten und einen geringeren spezifischen, d.h. produktbezogenen, Energiebedarf aus.

Um einen kontinuierlichen Produktionsbetrieb sicherzustellen, können die Adsorptionsbehälter einer entsprechenden Anordnung derart im Wechselbetrieb betrieben werden, dass sich stets mindestens einer der Adsorptionsbehälter im Adsorptionstakt befindet und damit ein Produkt liefern kann. Auch in diesem Fall können jedoch Zeiträume auftreten, in denen kein Produkt geliefert wird, beispielsweise während eines Druckausgleichs bzw. Druckaufbaus. Für diesen Fall können beispielsweise Produktpuffer verwendet werden. Dies, und ein Wechselbetrieb generell, ist jedoch nicht zwingend erforderlich.

Sauerstoffreiche Luftprodukte fallen in der PSA oder VPSA aufgrund der schwächeren Adsorption des Sauerstoffs jeweils im Adsorptionstakt an und werden daher unter einem gewissen Druck gebildet, der dem Einspeisedruck in die PSA bzw. VPSA abzüglich Druckverlusten entspricht.

Flüssigkeiten und Gase können im hier verwendeten Sprachgebrauch angereichert oder abgereichert an einer oder mehreren Komponenten sein, wobei sich diese Begriffe auf einen Gehalt in einer Ausgangsflüssigkeit oder einem Ausgangsgas beziehen, aus der oder dem die betrachtete Flüssigkeit oder das betrachtete Gas gewonnen wurde. Die Flüssigkeit oder das Gas ist angereichert, wenn diese oder dieses zumindest den 1,1-fachen, 1,5-fachen, 2-fachen, 5-fachen, 10-fachen 100-fachen oder 1.000-fachen Gehalt, und abgereichert, wenn diese oder dieses höchstens den 0,9-fachen, 0,5-fachen, 0,1-fachen, 0,01-fachen oder 0,001-fachen Gehalt einer entsprechenden Komponente, bezogen auf die Ausgangsflüssigkeit oder das Ausgangsgas enthält. Ist hier beispielsweise von "Sauerstoff' die Rede, sei hierunter auch eine Flüssigkeit oder ein Gas verstanden, die oder das reich an Sauerstoff ist, jedoch nicht ausschließlich hieraus bestehen muss.

Die vorliegende Anmeldung verwendet zur Charakterisierung von Drücken und Temperaturen die Begriffe Druckniveau und Temperaturniveau, wodurch zum Ausdruck gebracht werden soll, dass Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10% oder 20% um einen Mittelwert liegen. Entsprechende Druckniveaus und Temperaturniveaus können dabei in disjunkten Bereichen liegen oder in Bereichen, die einander überlappen. Insbesondere schließen Druckniveaus unvermeidliche Druckverluste ein. Entsprechendes gilt für Temperaturniveaus. Bei dem hier in bar angegebenen Druckniveaus handelt es sich um Absolutdrücke.

Unter einem Luftprodukt wird hier eine Komponente oder ein Komponentengemisch in gasförmigem oder flüssigem Zustand verstanden, welches durch trenntechnische Bearbeitung von Luft (Einsatzluft) gebildet werden kann, insbesondere durch Tieftemperaturzerlegung oder PSA bzw. VPSA. Ein Luftprodukt zeichnet sich daher insbesondere dadurch aus, dass es eine abweichende Zusammensetzung wie atmosphärische Luft, aber insbesondere gegenüber atmosphärischer Luft keine zusätzlichen Komponenten aufweist.

### Vorteile der Erfindung

Wie bereits erläutert, bilden sich einer zur Entfernung von Stickstoff ausgebildeten Lage in einer PSA bzw. VPSA zur Bearbeitung von Luft oder eines entsprechenden stickstoffhaltigen Gasgemischs eine vergleichsweise große bzw. lange Gleichgewichtszone und eine vergleichsweise kurze Stoffaustauschzone aus, wobei letztere durch steile Konzentrationsgradienten gekennzeichnet ist. Letzteres gilt insbesondere für das Ende des Adsorptionstakts.

In der Gleichgewichtszone sollten dabei ein geringer Druckverlust und eine hohe volumetrische Kapazität für den zu adsorbierenden Stickstoff vorliegen, während in der Gleichgewichtszone die Stoffaustauschkinetik (noch) eine geringere Rolle spielt. In der Stoffaustauschzone sollten hingegen ebenfalls ein geringer Druckverlust, zur Erreichung von ausreichenden Produktreinheiten aber zugleich eine geringe Neigung zur Mobilisierung der Adsorptionskörper (sogenanntes "Wühlen" der obersten Lage) und eine besonders vorteilhafte Stoffaustauschkinetik vorliegen. Wie eingangs erwähnt, sind dies teilweise einander widersprechende Zielstellungen, wenn man als einzige Auswahlgröße nur die Größe bzw. den Durchmesser der Adsorptionskörper als Stellgrößen besitzt.

Die vorliegende Erfindung beruht nun auf der Erkenntnis, dass es vor dem erläuterten Hintergrund von besonderem Vorteil ist, einen der Gleichgewichtszone entsprechenden Bereich einer Adsorptionseinheit mit homogenen, herkömmlichen, insbesondere sphärischen Adsorptionskörpern, einen der Stoffaustauschzone entsprechenden Bereich hingegen mit den bereits eingangs erläuterten Core-in-Shell-Adsorptionskörpern auszustatten. Alternativ dazu können jedoch auch beide Zonen mit Core-in-Shell-Adsorptionskörpern ausgestattet werden, die jedoch zueinander unterschiedliche Verhältnisse zwischen dem porösen, adsorbierenden Material und dem nichtporösen, nichtadsorbierenden Material aufweisen. Beide Zonen sind jeweils in Strömungsrichtung aufeinander folgende Zonen einer Lage, die zur Entfernung von Stickstoff aus einem entsprechenden Gasgemisch ausgebildet ist. Diese Lage kann sich insbesondere in Strömungsrichtung an eine Lage anschließen, die zur Entfernung von Wasser und ggf. von Verunreinigungen dient. Die zuletzt genannte Lage kann jedoch ggf. auch wegfallen, beispielsweise wenn im Rahmen der vorliegenden Erfindung bereits ein getrocknetes bzw. gereinigtes Gasgemisch eingesetzt wird.

Die vorliegende Erfindung schlägt insgesamt ein Verfahren zur Bearbeitung eines gasförmigen, Stickstoff enthaltenden Einsatzgemischs durch Druckwechseladsorption vor. Wie bereits mehrfach erwähnt, kann es sich bei dem Einsatzgemisch insbesondere um Luft mit den üblichen Gehalten an Sauerstoff, Stickstoff, Edelgasen und weiteren Komponenten handeln; die vorliegende Erfindung kann grundsätzlich jedoch auch zur Bearbeitung anderer, insbesondere entsprechend stickstoffreicher Gasgemische eingesetzt werden, wie zuvor erläutert. Bei der im Rahmen der vorliegenden Erfindung eingesetzten Druckwechseladsorption handelt es sich insbesondere um eine Vakuumdruckwechseladsorption; in einem Regenerationstakt wird den im Rahmen der vorliegenden Erfindung verwendeten Adsorberbehältern bzw. Adsorptionseinheiten also ein Gasgemisch auf einem unteratmosphärischen Druckniveau entnommen, wozu eine entsprechende Vakuumpumpe vorgesehen sein kann. Wie bereits oben wird zu weiteren Details entsprechender Verfahren auf die einschlägige Fachliteratur verwiesen.

Im Rahmen der vorliegenden Erfindung wird das verwendete Einsatzgemisch zeitweise und unter Druck in einer Hauptströmungsrichtung durch eine mit einem Adsorbensmaterial gefüllte Adsorptionseinheit geführt. Wie allgemein bekannt, können zur Bearbeitung von Gasgemischen verwendete Adsorptionsanordnungen zwei oder mehrere Adsorptionseinheiten (Adsorptionsbehälter) aufweisen, die dann, wie zuvor erläutert, im Wechselbetrieb betrieben werden. Auch dies kann im Rahmen der vorliegenden Erfindung der Fall sein. Sämtliche für "eine" Adsorptionseinheit getroffene Erläuterungen betreffen daher mehrere Adsorptionseinheiten in einer entsprechenden Anordnung in gleicher Weise. Unter der "Hauptströmungsrichtung" sei hier eine Richtung entlang einer Achse zwischen einer Einspeisestelle in die Adsorptionseinheit und einer Entnahmestelle für das jeweilige Gasgemisch verstanden. Diese Hauptströmungsrichtung entspricht der Strömungsrichtung, entlang derer die Gasmoleküle in einer entsprechenden Adsorptionseinheit insgesamt bzw. in Form einer mittleren Bewegungsrichtung geführt werden bzw. strömen, ungeachtet von lokalen Störungen und Turbulenzen.

Zur Überwindung der zuvor erläuterten Nachteile schlägt die vorliegende Erfindung vor, das Adsorbensmaterial in einem ersten Bereich entlang der Hauptströmungsrichtung in der Adsorptionseinheit überwiegend oder ausschließlich in Form erster Adsorptionskörper bereitgestellt wird, und dass das Adsorbensmaterial in einem zweiten Bereich entlang der Hauptströmungsrichtung, der stromab des ersten Bereichs liegt, überwiegend oder ausschließlich in Form zweiter Adsorptionskörper bereitgestellt wird. Zumindest die - weiter stromabwärts liegenden - zweiten Adsorptionskörper sind dabei erfindungsgemäß als Kompositkörper bereitgestellt, die einen inneren Kern aus einem nichtporösen, nichtadsorbierenden Material und eine äußere, das Adsorbensmaterial aufweisende oder aus diesem gebildete Schicht aufweisen. Die zweiten Adsorptionskörper weisen dabei einen geringeren Anteil des Adsorbensmaterials am Körpervolumen auf als die ersten Adsorptionskörper.

Auch die - weiter stromaufwärts liegenden - ersten Adsorptionskörper können als Kompositkörper bereitgestellt sein und damit einen inneren Kern aus einem nichtporösen, nichtadsorbierenden Material und eine äußere, das Adsorbensmaterial aufweisende oder aus diesem gebildete Schicht aufweisen. In diesem Fall nimmt der innere Kern bei den ersten Adsorptionskörpern jedoch einen geringeren Anteil am Körpervolumen als bei den zweiten Adsorptionskörpern ein.

Es ist jedoch auch möglich, dass die ersten Adsorptionskörper in Form homogener, das Adsorbensmaterial aufweisender oder aus dem Adsorbensmaterial gebildeter Adsorptionskörper bereitgestellt sind. Auch in diesem Fall ist also der Anteil des Adsorbensmaterials an dem Körpervolumen bei den zweiten Adsorptionskörpern geringer als bei den ersten. Diese homogenen Adsorptionskörper können insbesondere sphärisch ausgebildet sein und die unten erläuterten Dimensionen aufweisen.

Bei den Kompositkörpern, die als zweite Adsorptionskörpern verwendet werden und auch als die ersten Adsorptionskörper verwendet werden können, handelt es sich um typische Core-in-Shell-Adsorptionskörper, wie sie zuvor unter Bezugnahme auf die einschlägige Patentliteratur beschrieben wurden. Auf die obigen Erläuterungen und insbesondere Figur 4 wird daher ausdrücklich verwiesen.

Im Rahmen der vorliegenden Erfindung entspricht der erste Bereich insbesondere der Gleichgewichtszone und der zweite Bereich entspricht insbesondere der Stoffaustauschzone in einer entsprechenden Adsorptionseinheit bzw. in deren Stickstoffentfernungslage. Wie erläutert, kann im vorliegenden Fall, insbesondere zur Bearbeitung von Luft als Einsatzgemisch, stromauf einer derartigen Stickstoffentfernungslage eine weitere Lage, insbesondere zur Entfernung von Wasser und anderen Verunreinigungen, vorgesehen sein. Dies ist nicht notwendigerweise der Fall, wenn anstelle von feuchter bzw. verunreinigter Luft bereits getrocknete bzw. aufgereinigte Luft dem Verfahren zugeführt wird.

Durch die Verwendung von homogenen ersten Adsorptionskörpern mit einem relativ großen Partikeldurchmesser von mehr als 2 mm in dem ersten Bereich kann durch die vorliegende Erfindung insbesondere ein höherer volumetrischer Durchsatz und ein geringerer Druckverlust erzielt werden. Durch die Verwendung der als Kompositkörper ausgebildeten zweiten Adsorptionskörper in dem zweiten Bereich kann hingegen eine besonders gute Stoffaustauschkinetik erzielt werden. Um dies zu erreichen, ist es durch die Verwendung von Kompositkörpern nicht notwendig, dass zweiten Adsorptionskörper einen klein(er)en Partikeldurchmesser von beispielsweise weniger als 2 mm aufweisen, da der inerte Kern vorhanden ist. Auf diese Weise wird gewährleistet, dass hier ein geringer Druckverlust und ein niedrigeres Mobilisierungsrisiko auftreten. Da ein entsprechender zweiter Bereich stromab der Gleichgewichtszone liegt, spielt der zuvor erläuterte Nachteil der geringeren Menge an Adsorbensmaterial hier eine geringere Rolle, da bereits eine deutliche Abreicherung an Stickstoff erzielt worden ist und daher nur mehr die Restmengen an Stickstoff adsorbiert werden müssen. Die vorliegende Erfindung kombiniert also in dieser Ausgestaltung die Vorteile homogener Adsorptionskörper, die in Zusammenhang mit der vorliegenden Erfindung insbesondere in deren hoher Menge an Adsorbensmaterial bei gleichzeitig gut einstellbarem Druckverlust liegen, mit den zuvor erläuterten Vorteilen entsprechender Core-in-Shell-Adsorptionskörper. Entsprechende Vorteile ergeben sich aber in analoger Weise auch bei der Verwendung von Kompositkörpern als ersten Adsorptionskörpern, falls diese einen höheren Anteil an porösem und adsorbierendem Material aufweisen als die zweiten.

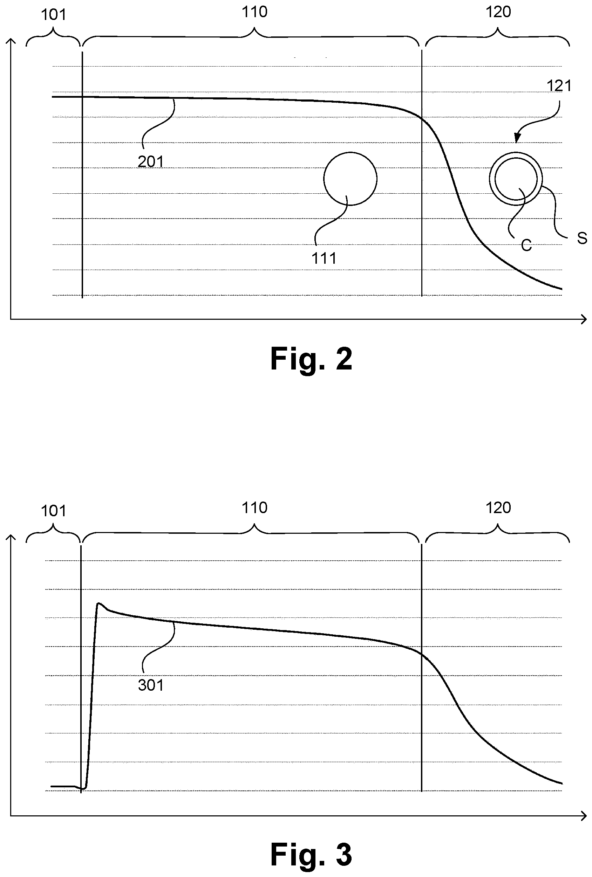

Die erfindungsgemäß sich ergebenen Vorteile liegen insbesondere darin begründet, dass sich, insbesondere am Ende eines Adsorptionstakts, in der Gleichgewichtszone einer entsprechenden Adsorptionseinheit eine nahezu konstante Stickstoffkonzentration einstellt. Der Partialdruck, der die treibende Kraft der Adsorption von Stickstoff an das Adsorbensmaterial darstellt, ist dabei hoch genug, dass Kinetikeffekte eine sekundäre Rolle spielen und eine vergleichsweise große Menge an Stickstoff adsorbiert werden kann. Andererseits ist der Partialdruck von Stickstoff in der Stoffaustauschzone sehr viel geringer, und daher ist eine schnelle Austauschkinetik erforderlich. Letztere wird insbesondere durch die Core-in-Shell-Adsorptionskörper gewährleistet, ohne dass hierbei ein Mobilisierungsrisiko auftritt. Diese Umstände werden auch unter Bezugnahme auf die beigefügten Figuren 2 und 3 nochmals eingehend erläutert.

Ein zusätzlicher Vorteil, der durch die Verwendung der Kompositkörper entsteht, ist die Dämpfung der Tempraturschwankungen in der Schüttung. Da der Adsorptionsvorgang ein exothermer Prozess ist, steigt während der Adsorption die Temperatur des Adsorptionmaterials. Dieser Temperaturanstieg wirkt als Bremse für den Adsorptionsprozess. Bei Verwendung von Komositkörpern wird ein Teil der enstandenen Wärme an den inneren Kern weitergeleitet. Daher ist der Temperaturanstieg in der äußeren Schicht vergleichsweise niedriger. Bei der Regenerierung des Materials (Desorption) ist ein ähnliches Phänomen zu beobachten. Die Desorption ist ein endothermer Prozess und die Temperatur des Adsorptionmaterials sinkt während der Desorption. Die niedrige Temperatur ist wiederum ungünstig für die Desorption. Durch den inneren Kern wird auch hier die Temperaturschwankung begrenzt. Der innere Kern wirkt also in beiden Fällen gewissermaßen als Puffer, der die Temperaturschwankungen begrenzt.

Das Core-in-Shell-Material von Kompositkörpern besteht, wie schon erwähnt, aus dem nichtadsorbierenden, nichtporösen inerten Kern und der adsorbierenden, porösen äußeren Schicht, die das Adsorptionsmaterial enthält. Die schnelle Kinetik wird maßgeblich von der Stärke dieser äußeren Schicht bestimmt. Um eine relativ dünne äußere Schicht zu erreichen, soll der volumetrische Anteil des Adsorptionsmaterials bei den zweiten Adsorptionskörpern in dem zweiten Bereich bei bis zu 60%, beispielsweise bei 10 bis 50% oder 20 bis 40% oder ca. 50% des Körpervolumens der Adsorptionskörper liegen.

Wie erwähnt, können die ersten Adsorptionskörper aus einem homogenen Material (volumetrischer Anteil an Adsorptionsmaterial 100%), aber auch durch ein Core-in-Shell Material gebildet sein. In letzterem Fall sollte die äußere Schicht der Adsorptionskörperchen vorteilhafterweise dick genug sein, damit die volumetrische Kapazität sich nicht zu stark reduziert. Dies bedeutet, dass der volumetrische Anteil des Adsorptionsmaterials mindestens 60%, beispielswweise 70 bis 90% oder ca. 80% betragen sollte.

In der nachfolgenden Tabelle, die teilweise auch die Bezeichnungen gemäß Figur 4 verwendet, sind beispielhafte Werte für entsprechende erste und zweite Adsorptionskörper angegeben, die in diesem Fall beide als Kompositkörper ausgebildet sind.

**Tabelle 1**

| | Erste Adsorptionskörper | Zweite Adsorptionskörper |
|---|---|---|
| Durchmesser des inneren Kerns (d) | 1,6 mm | 1,5 mm |
| Volumen des inneren Kerns (V_{Kern}) | 2,1 mm³ | 1,8 mm³ |
| Durchmesser des Kompositkörpers (D) | 2,5 mm | 2,0 mm |
| Körpervolumen des Kompositkörpers (V_{Körper}) | 8,2 mm³ | 4,2 mm³ |
| Stärke der äußeren Schicht (h) | 0,45 mm | 0,25 mm |
| Volumenanteil an Adsorptionsmaterial | ca. 74% | ca. 57% |

Insgesamt kann im Rahmen der vorliegenden Erfindung ein besonders hoher Durchsatz einer entsprechenden Anordnung, insbesondere bei Einsatz einer VPSA, erzielt werden, wobei insbesondere kürzere Zykluszeiten erzielt werden können. Dies führt zur deutlich verringerten Investitions- und Betriebskosten.

Im Rahmen der vorliegenden Erfindung kann das Adsorbensmaterial insbesondere aus der Gruppe ausgewählt sein, die aus aktiviertem Aluminiumoxid, Zeolithen, Materialien mit Mesoporen, Kohlemolekularsieb und Gemischen hiervon besteht.

Der innere Kern der Kompositkörper kann hingegen insbesondere ein Material aufweisen, das aus der Gruppe ausgewählt ist, die aus Metallen, Metalloxid, Mischoxiden, dichten Keramikoxiden wie beispielsweise Corderit, Perovskit, gesinterten Tonen wie beispielsweise Kaolin, Attapulgit, Silikas, Aluminiumoxiden, Silika-Aluminiumoxid, Silika-Magnesiumoxid, Silika-Zirkoniumoxid, Silika-Puriumoxid, Silika-Berylliumoxid, und Silika-Titaniumoxid sowie ternären Zusammensetzungen wie beispielsweise Silika-Aluminiumoxid-Thoriumoxid, Silika-Aluminiumoxid, Zirkoniumoxid, und Gemischen hiervon besteht. Durch die Verwendung derartiger Materialien können besonders vorteilhafte Eigenschaften entsprechender Kompositkörper erzielt werden. Im Rahmen der vorliegenden Erfindung können der erste Bereich und der zweite Bereich zusammen eine (Gesamt-)länge aufweisen, von welcher der erste Bereich 40 bis 80% umfasst. Insbesondere kann der erste Bereich 0,5-fach, 1-fach oder 2-fach so lang sein wie der zweite Bereich, wobei auch Zwischenwerte zwischen den jeweils genannten Werten umfasst sein können. Die genauen Dimensionierungen ergeben sich insbesondere in einer Betrachtung der Gleichgewichtszone und der Stoffaustauschzone in einer entsprechenden Adsorptionseinheit.

Mit besonderem Vorteil ist der erste Bereich also im Rahmen der vorliegenden Erfindung derart dimensioniert, dass er einer Gleichgewichtszone für Stickstoff in der Adsorptionseinheit entspricht, und der zweite Bereich ist insbesondere derart dimensioniert, dass er einer Stoffaustauschzone für Stickstoff in der Adsorptionseinheit entspricht. Die besonderen Vorteile der jeweiligen Wahl von Adsorptionskörpern in entsprechenden Zonen, wie sie erfindungsgemäß vorgenommen wird, wurden bereits oben ausführlich erläutert.

Im Rahmen der vorliegenden Erfindung kann insbesondere vorgesehen sein, eine Länge der Gleichgewichtszone und eine Länge der Stoffaustauschzone, insbesondere vorab, zu ermitteln, wozu experimentelle Verfahren und/oder simulative Verfahren zum Einsatz kommen können. Die Ermittlung entsprechender Längen bzw. Dimensionen ist für den Fachmann einfach möglich und erfordert keine aufwendige und erfinderische Tätigkeit. Die ersten und die zweiten Adsorptionskörper können im Rahmen der vorliegenden Erfindung jeweils sphärisch ausgebildet sein und/oder einen Mindestdurchmesser von 2 mm aufweisen.. Die Größe der zweiten Adsorptionskörper kann der Größe der ersten Adsorptionsköper entsprechen oder die zweiten Adsorptionskörper können kleiner als die zweiten sein. Eine Wahl der jeweils geeigneten Partikelgröße richtet sich insbesondere nach den zuvor erläuterten Kriterien, insbesondere einer gewünschten Stoffaustauschkinetik in Kombination mit dem gewünschten Druckverlust.

Wie allgemein aus dem Bereich der Adsorptionstechnik bekannt und daher hier nur der Vollständigkeit halber erwähnt, können im Rahmen der vorliegenden Erfindung insbesondere auch mehrere Adsorptionseinheiten in einer entsprechenden Anordnung verwendet werden und diese können im Wechselbetrieb betrieben werden. Wie ebenfalls mehrfach erläutert, kann insbesondere Luft als das Einsatzgemisch verwendet werden und die erste und die zweite zuvor erläuterte Zone können Teil einer Stickstoffentfernungsschicht in einer entsprechenden Adsorptionseinheit sein, die sich einer Wasserentfernungsschicht in der Adsorptionseinheit anschließt. Die Wasserentfernungsschicht kann dabei mit einem geeigneten Adsorbensmaterial ausgestattet sein, das sich zur Entfernung von Wasser eignet.

Die vorliegende Erfindung erstreckt sich ferner auf eine Anordnung zur Bearbeitung eines gasförmigen, Stickstoff enthaltenden Einsatzgemischs. Zu weiteren Merkmalen einer derartigen Anordnung sei auf den entsprechenden unabhängigen Patentanspruch verwiesen. Insbesondere ist eine derartige Anordnung zur Durchführung eines Verfahrens eingerichtet, wie es zuvor in unterschiedlichen Ausgestaltungen erläutert wurde. Auf die oben getroffenen Erläuterungen sei daher ausdrücklich verwiesen.

Die Erfindung wird nachfolgend unter Bezugnahme auf die beigefügten Zeichnungen weiter erläutert, welche Ausgestaltungen der vorliegenden Erfindung zeigen.

### Kurze Beschreibung der Zeichnungen

Figur 1 zeigt eine Adsorptionseinheit bei einer Verwendung zur Bearbeitung von Luft.
Figur 2 zeigt einen Konzentrationsgradienten von Stickstoff in einer Adsorptionseinheit gemäß einer Ausführungsform der Erfindung.
Figur 3 zeigt eine Beladung mit Stickstoff in einer Adsorptionseinheit gemäß einer Ausführungsform der Erfindung.
Figur 4 zeigt einen als Kompositkörper ausgebildeten Adsorptionskörper in vereinfachter schematischer Darstellung.

### Ausführliche Beschreibung der Zeichnungen

In den Figuren sind einander baulich oder funktionell entsprechende Komponenten mit identischen Bezugszeichen angegeben und werden der Übersichtlichkeit halber nicht wiederholt erläutert. Es versteht sich, dass, wenn nachfolgend Komponenten von Anordnungen und Anlagen gemäß Ausgestaltungen der vorliegenden Erfindung beschrieben werden, diese Erläuterungen erfindungsgemäße Verfahren und deren Ausgestaltungen in gleicher Weise betreffen.

Die Zeichnungen betreffen jeweils Ausgestaltungen, in denen die ersten Adsorptionskörper als homogene Adsorptionskörper, d.h. nicht als Core-in-Shell- bzw. Kompositkörper ausgebildet sind. Wie erwähnt, kann die vorliegende Erfindung aber auch einen derartigen Fall betreffen.

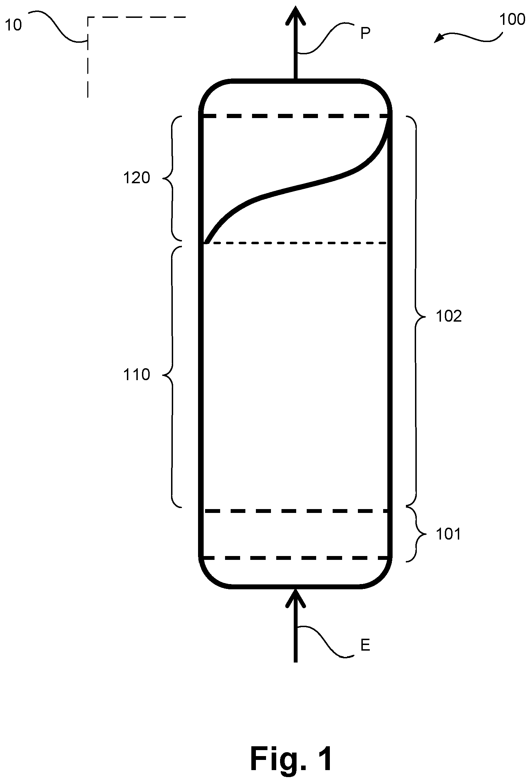

In Figur 1 ist eine Adsorptionseinheit bei einer Verwendung zur Bearbeitung von Luft gemäß einer Ausgestaltung der vorliegenden Erfindung schematisch veranschaulicht und insgesamt mit 100 bezeichnet.

Die Adsorptionseinheit 100 kann insbesondere Teil einer hier nur schematisch angedeuteten Anordnung 10 sein, in welcher mehrere Adsorptionseinheiten 100 angeordnet sein und in grundsätzlich bekannter Weise betrieben werden können. Der Adsorptionseinheit 100 wird im dargestellten Beispiel ein mit E bezeichnetes Einsatzgemisch, insbesondere Luft, zugeführt.

Die Adsorptionseinheit 100 ist hier in einem Adsorptionstakt der zuvor erläuterten Art dargestellt, so dass dieser ein Produktgemisch P entnommen wird. In einem sich anschließenden Desorptions- bzw. Regenerationstakt werden hingegen adsorbierte Komponenten, insbesondere unter einem unteratmosphärischen Druckniveau im Falle der VPSA, von dem in der Adsorptionseinheit 100 enthaltenen Adsorptionsmaterial desorbiert. Durch den Einsatz der Adsorptionseinheit 100 kann das Einsatzgemisch E von Komponenten, die gut an das Adsorbensmaterial adsorbieren, im vorliegenden Fall an Stickstoff, abgereichert werden, so dass ein Produktgemisch P an Sauerstoff angereichert ist bzw. reinen Sauerstoff darstellt.

In der Adsorptionseinheit 100 sind eine erste Lage 101 und eine zweite Lage 102 ausgebildet. Die erste Lage 101 stellt eine zuvor mehrfach erläuterte Wasserentfernungslage dar und ist hierzu mit einem geeigneten Adsorbensmaterial ausgestattet. Die zweite Lage 102 bildet eine Stickstoffentfernungslage. Letztere wird nachfolgend im Detail betrachtet.

In Betrieb bilden sich in der Stickstoffentfernungsschicht 102 eine Gleichgewichtszone 110 und eine Stoffaustauschzone 120 aus, wie grundsätzlich aus dem Bereich der Adsorptionstechnik bekannt. Die Gleichgewichtszone 110 ist dabei insbesondere durch einen konstanten bzw. im Wesentlichen konstanten Stickstoffpartialdruck gekennzeichnet, wohingegen sich der Stickstoffpartialdruck in der Stoffaustauschzone 120 in Form eines steilen Gradienten verringert.

In Figur 2 ist ein Konzentrationsgradient von Stickstoff, am Ende der Adsorptionsphase, in einer Adsorptionseinheit gemäß einer Ausführungsform der Erfindung, beispielsweise Adsorptionseinheit 100 gemäß Figur 1, in Form eines Konzentrationsdiagramms schematisch veranschaulicht. In dem in Figur 2 dargestellten Diagramm ist dabei eine Länge der Adsorptionseinheit bzw. eines entsprechenden Adsorbensbett auf der Abszisse gegenüber einer Stickstoffkonzentration in beliebigen Einheiten auf der Ordinate dargestellt. Erneut sind die Wasserentfernungsschicht 101 und die Gleichgewichtszone 110 sowie die Stoffaustauschzone 120 der Stickstoffentfernungsschicht 102 (hier nicht gesondert bezeichnet) dargestellt. Die Stickstoffkonzentrationskurve ist mit 201 bezeichnet. Wie hier nochmals gesondert veranschaulicht, sind in der Gleichgewichtszone der Adsorptionseinheit 100 homogene, ein Adsorbensmaterial aufweisende oder aus dem Adsorbensmaterial gebildete Adsorptionskörper 111 bereitgestellt, wohingegen in dem zweiten Bereich, also in der Stoffaustauschzone, Kompositkörper 121 bereitgestellt sind, wobei die Kompositkörper 121 einen inneren Kern C aus einem nichtporösen, nichtadsorbierenden Material und eine äußere, das Adsorptionsmaterial aufweisende oder aus diesem gebildete Schicht S umfassen.

Wie sich aus Figur 2 ergibt, ist die Stickstoffkonzentration und damit der Stickstoffpartialdruck, am Ende der Adsorption, in der Gasphase in der Gleichgewichtszone 110 der Stickstoffentfernungsschicht 102 im Wesentlichen konstant. Da dieser Stickstoffpartialdruck die treibende Kraft für die Adsorption von Stickstoff darstellt, ist diese ausreichend hoch, so dass Kinetikeffekte, wie erwähnt, hier eine geringere Rolle spielen und Stickstoff daher einfach adsorbiert werden kann. Dies wird insbesondere auch noch aus Figur 3 deutlich. Andererseits ist die Stickstoffkonzentration bzw. der entsprechende Partialdruck in der Stoffaustauschzone 120 sehr viel geringer und daher eine schnelle Kinetik erforderlich. Wie erwähnt, erfüllen die hier verwendeten Kompositkörper diese Anforderungen.

In Figur 3 ist eine Beladung mit Stickstoff in einer Adsorptionseinheit gemäß einer Ausführungsform der Erfindung in Form eines entsprechenden Diagramms veranschaulicht. In dem Diagramm gemäß Figur 3 ist wiederum eine Länge einer Adsorptionseinheit bzw. eines Adsorbensbetts auf der Abszisse dargestellt, nun jedoch gegenüber einem eine Beladung des Adsorbensmaterials kennzeichnenden Wert auf der Ordinate. Erneut sind die Wasserentfernungsschicht 101 sowie die Gleichgewichtszone 110 und die Stoffaustauschzone 120 der Stickstoffentfernungsschicht, die auch hier nicht gesondert bezeichnet ist, veranschaulicht. Eine der Beladung des Adsorbensmaterials entsprechende Kurve ist mit 301 angegeben. Wie sich aus Figur 3 insbesondere ergibt, ist unter den vorliegenden Gegebenheiten eine vollständige bzw. nahezu vollständige Beladung des Adsorbensmaterials in der gesamten Gleichgewichtszone möglich.

Figur 4 zeigt einen als Kompositkörper ausgebildeten Adsorptionskörper in vereinfachter schematischer Darstellung. Dieser ist wie zuvor mit 121 bezeichnet und umfasst einen inneren Kern C und eine äußere Schicht S. Mit D ist der Durchmesser des Kompositkörpers 121, der das "Körpervolumen" im oben erläuterten Sinne definiert, bezeichnet. Mit d ist der Durchmesser des inneren Kerns C bezeichnet. Hieraus ergibt sicch die Stärke der äußeren Schicht S zu h.

## Patentansprüche

1. Verfahren zur Bearbeitung eines gasförmigen, Stickstoff enthaltenden Einsatzgemischs (E) durch Druckwechseladsorption, bei dem das Einsatzgemisch zeitweise unter Druck in einer Hauptströmungsrichtung durch eine mit einem Adsorbensmaterial gefüllte Adsorptionseinheit (100) geführt wird, **dadurch gekennzeichnet, dass** das Adsorbensmaterial in einem ersten Bereich (110) entlang der Hauptströmungsrichtung überwiegend oder ausschließlich in Form erster Adsorptionskörper (111) bereitgestellt ist, dass das Adsorbensmaterial in einem zweiten Bereich (120) entlang der Hauptströmungsrichtung, der stromab des ersten Bereichs (110) liegt, überwiegend oder ausschließlich in Form zweiter Adsorptionskörper (121) bereitgestellt ist, dass zumindest die zweiten Adsorptionskörper (121) als Kompositkörper bereitgestellt sind, die einen inneren Kern (C) aus einem nichtporösen, nichtadsorbierenden Material und eine äußere, das Adsorbensmaterial aufweisende oder aus diesem gebildete Schicht (S) aufweisen, und dass die zweiten Adsorptionskörper (121) einen geringeren Anteil des Adsorbensmaterials am Körpervolumen aufweisen als die ersten Adsorptionskörper (111).

2. Verfahren nach Anspruch 1, bei dem auch die ersten Adsorptionskörper (111) als Kompositkörper mit einem inneren Kern aus einem nichtporösen, nichtadsorbierenden Material und einer äußeren, das Adsorbensmaterial aufweisenden oder aus diesem gebildeten Schicht bereitgestellt sind, wobei die äußere Schicht bei den ersten Adsorptionskörpern (111) einen größeren Anteil am Körpervolumen als bei den zweiten Adsorptionskörpern (121) einnimmt.

3. Verfahren nach Anspruch 2, bei dem der volumetrische Anteil des porösen, adsorbierenden Materials bei den zweiten Adsorptionskörpern (121) bei 50 bis 60% des Körpervolumens und bei den ersten Adsorptionskörpern (111) bei mehr als 70% des Körpervolumens liegt.

4. Verfahren nach Anspruch 1, bei dem die ersten Adsorptionskörper in Form homogener, das Adsorbensmaterial aufweisender oder aus dem Adsorbensmaterial gebildeter Adsorptionskörper bereitgestellt ist.

5. Verfahren nach Anspruch 4, bei dem die ersten Adsorptionskörper einen Durchmesser von mehr als 2 mm aufweisen.

6. Verfahren nach einem der vorstehenden Ansprüche, bei dem das Adsorbensmaterial aus der Gruppe ausgewählt ist, die aus aktiviertem Aluminiumoxid, Zeolithen, Materialien mit Mesoporen, Kohlemolekularsieb und Gemischen hiervon besteht.

7. Verfahren nach einem der vorstehenden Ansprüche, bei dem der innere Kern (C) ein Material aufweist, das aus der Gruppe ausgewählt ist, die aus Metallen, Metalloxid, Mischoxiden, dichten Keramikoxiden wie beispielsweise Corderit, Perovskit, gesinterten Tonen wie beispielsweise Kaolin, Attapulgit, Silikas, Aluminiumoxiden, Silika-Aluminiumoxid, Silika-Magnesiumoxid, Silika-Zirkoniumoxid, Silika-Puriumoxid, Silika-Berylliumoxid, und Silika-Titaniumoxid sowie ternären Zusammensetzungen wie beispielsweise Silika-Aluminiumoxid-Thoriumoxid, Silika-Aluminiumoxid, Zirkoniumoxid, und Gemischen hiervon besteht.

8. Verfahren nach einem der vorstehenden Ansprüche, bei dem der erste Bereich (110) und der zweite Bereich (120) zusammen eine Länge aufweisen, von welcher der erste Bereich 40 bis 80% umfasst.

9. Verfahren nach einem der vorstehenden Ansprüche, bei dem der erste Bereich (110) derart dimensioniert ist, dass er einer Gleichgewichtszone für Stickstoff in der Adsorptionseinheit (100) entspricht, und bei dem der zweite Bereich (120) derart dimensioniert ist, dass er einer Stoffaustauschzone für Stickstoff in der Adsorptionseinheit (100) entspricht.

10. Verfahren nach Anspruch 9, das umfasst, eine Länge der Gleichgewichtszone und eine Länge der Stoffaustauschzone experimentell und/oder simulativ zu ermitteln.

11. Verfahren nacheinem der vorstehenden Ansprüche, bei dem die ersten und/oder die zweiten Kompositkörper jeweils sphärisch ausgebildet sind und/oder einen Mindestdurchmesser von 2 mm aufweisen.

12. Verfahren nach einem der vorstehenden Ansprüche, bei dem Luft als das Einsatzgemisch (E) verwendet wird.

13. Verfahren nach Anspruch 9, bei dem die erste und die zweite Zone (110, 120) Teil einer Stickstoffentfernungsschicht (102) sind, die sich einer Wasserentfernungsschicht (101) in der Adsorptionseinheit (100) anschließt.

14. Verfahren nach einem der vorstehenden Ansprüche, das als Vakuumdruckwechseladsorptionsverfahren durchgeführt wird.

15. Anordnung (10) zur Bearbeitung eines Stickstoff enthaltenden Einsatzgemischs (E) durch Druckwechseladsorption, mit einer mit einem Adsorbensmaterial gefüllten Adsorptionseinheit (100) und mit Mitteln, die dafür eingerichtet sind, das Einsatzgemisch zeitweise unter Druck in einer Hauptströmungsrichtung durch die Adsorptionseinheit (100) zu führen, **dadurch gekennzeichnet, dass** das Adsorbensmaterial in einem ersten Bereich (110) entlang der Hauptströmungsrichtung überwiegend oder ausschließlich in Form erster Adsorptionskörper (111) bereitgestellt ist, dass das Adsorbensmaterial in einem zweiten Bereich (120) entlang der Hauptströmungsrichtung, der stromab des ersten Bereichs (110) liegt, überwiegend oder ausschließlich in Form zweiter Adsorptionskörper (121) bereitgestellt ist, dass zumindest die zweiten Adsorptionskörper (121) als Kompositkörper bereitgestellt sind, die einen inneren Kern (C) aus einem nichtporösen, nichtadsorbierenden Material und eine äußere, das Adsorbensmaterial aufweisende oder aus diesem gebildete Schicht (S) aufweisen, und dass die zweiten Adsorptionskörper (121) einen geringeren Anteil des Adsorbensmaterials am Körpervolumen aufweisen als die ersten Adsorptionskörper (111).

## Claims

1. A method for processing a gaseous, nitrogen-containing feed mixture (E) by pressure swing adsorption, in which method the feed mixture is conducted, temporarily and under pressure, in a main flow direction through an adsorption unit (100) filled with an adsorbent material, **characterized in that** the adsorbent material is provided, in a first region (110) along the main flow direction, predominantly or exclusively in the form of first adsorption bodies (111), **in that** the adsorbent material is provided, in a second region (120) along the main flow direction and downstream of the first region (110), predominantly or exclusively in the form of second adsorption bodies (121), **in that** at least the second adsorption bodies (121) are provided as composite bodies having an inner core (C) made of a non-porous, non-adsorbent material and an outer layer (S) comprising the adsorbent material or formed therefrom, and **in that** the second adsorption bodies (121) have a smaller proportion of the adsorbent material in terms of body volume than the first adsorption bodies (111).

2. The method according to claim 1, wherein the first adsorption bodies (111) are also provided as composite bodies having an inner core made of a non-porous, non-adsorbent material and an outer layer comprising the adsorbent material or formed therefrom, the outer layer occupying a larger proportion in terms of body volume in the first adsorption bodies (111) than in the second adsorption bodies (121).

3. The method according to claim 2, wherein the volumetric proportion of the porous, adsorbent material in the second adsorption bodies (121) is 50 to 60% of the body volume and in the first adsorption bodies (111) is more than 70% of the body volume.

4. The method according to claim 1, wherein the first adsorption bodies are provided in the form of homogeneous adsorption bodies comprising the adsorbent material or formed from the adsorbent material.

5. The method according to claim 4, wherein the first adsorption bodies have a diameter of more than 2 mm.

6. The method according to any one of the preceding claims, wherein the adsorbent material is selected from the group consisting of activated aluminum oxide, zeolites, materials with mesopores, carbon molecular sieve and mixtures thereof.

7. The method according to any one of the preceding claims, wherein the inner core (C) has a material selected from the group consisting of metals, metal oxide, mixed oxides, dense ceramic oxides such as, for example, corderite, perovskite, sintered clays such as, for example, kaolin, attapulgite, silicas, aluminum oxides, silica-aluminum oxide, silica-magnesium oxide, silica-zirconium oxide, silica-purium oxide, silica-beryllium oxide, and silica-titanium oxide as well as ternary compositions such as, for example, silica-aluminum oxide-thorium oxide, silica-aluminum oxide, zirconium oxide, and mixtures thereof.

8. The method according to any one of the preceding claims, wherein the first region (110) and the second region (120) together have a length of which the first region comprises 40 to 80%.

9. The method according to any one of the preceding claims, wherein the first region (110) is dimensioned such that it corresponds to an equilibrium zone for nitrogen in the adsorption unit (100), and wherein the second region (120) is dimensioned such that it corresponds to a mass transfer zone for nitrogen in the adsorption unit (100).

10. The method according to claim 9, which includes experimentally and/or simulatively determining a length of the equilibrium zone and a length of the mass transfer zone.

11. The method according to any one of the preceding claims, wherein the first and/or the second composite bodies are each spherical and/or have a minimum diameter of 2 mm.

12. The method according to any one of the preceding claims, wherein air is used as the feed mixture (E).

13. The method according to claim 9, wherein the first and the second zone (110, 120) are part of a nitrogen removal layer (102) that follows a water removal layer (101) in the adsorption unit (100).

14. The method according to any one of the preceding claims, which is carried out as a vacuum pressure swing adsorption method.

15. An arrangement (10) for processing a nitrogen-containing feed mixture (E) by pressure swing adsorption, having an adsorption unit (100) filled with an adsorbent material and having means which are designed to guide the feed mixture, temporarily and under pressure, in a main flow direction through the adsorption unit (100), **characterized in that** the adsorbent material is provided, in a first region (110) along the main flow direction, predominantly or exclusively in the form of first adsorption bodies (111), **in that** the adsorbent material is provided, in a second region (120) along the main flow direction and downstream of the first region (110), predominantly or exclusively in the form of second adsorption bodies (121), **in that** at least the second adsorption bodies (121) are provided as composite bodies having an inner core (C) made of a non-porous, non-adsorbent material and an outer layer (S) comprising the adsorbent material or formed therefrom, and **in that** the second adsorption bodies (121) have a smaller proportion of the adsorbent material in terms of body volume than the first adsorption bodies (111).

## Revendications

1. Procédé permettant le traitement d'un mélange de charge (E) gazeux contenant de l'azote par adsorption à pression modulée, dans lequel le mélange de charge est conduit temporairement sous pression dans une direction d'écoulement principale par une unité d'adsorption (100) remplie d'un matériau adsorbant, **caractérisé en ce que** le matériau adsorbant est fourni dans une première zone (110) le long de la direction d'écoulement principale principalement ou exclusivement sous la forme de premiers corps d'adsorption (111), **en ce que** le matériau adsorbant est fourni dans une seconde zone (120) se trouvant en aval de la première zone (110) le long de la direction d'écoulement principale principalement ou exclusivement sous la forme de seconds corps d'adsorption (121), **en ce qu'**au moins les seconds corps d'adsorption (121) sont fournis sous la forme de corps composites qui présentent un noyau interne (C) constitué d'un matériau non adsorbant non poreux et une couche externe (S) présentant le matériau adsorbant ou étant formée à partir de celui-ci, **et en ce que** les seconds corps d'adsorption (121) présentent une proportion du matériau adsorbant dans le volume de corps inférieure à celle des premiers corps d'adsorption (111).

2. Procédé selon la revendication 1, dans lequel les premiers corps d'adsorption (111) sont également fournis sous la forme de corps composites comportant un noyau interne constitué d'un matériau non adsorbant non poreux et une couche externe présentant le matériau adsorbant ou étant formée à partir de celui-ci, la couche externe des premiers corps d'adsorption (111) occupant une plus grande proportion dans le volume de corps que celle des seconds corps d'adsorption (121).

3. Procédé selon la revendication 2, dans lequel la proportion volumétrique du matériau adsorbant poreux est de 50 à 60 % du volume de corps dans les seconds corps d'adsorption (121) et de plus de 70 % du volume de corps dans les premiers corps d'adsorption (111).

4. Procédé selon la revendication 1, dans lequel les premiers corps d'adsorption sont fournis sous la forme de corps d'adsorption homogènes présentant le matériau adsorbant ou étant formés à partir du matériau adsorbant.

5. Procédé selon la revendication 4, dans lequel les premiers corps d'adsorption présentent un diamètre supérieur à 2 mm.

6. Procédé selon l'une des revendications précédentes, dans lequel le matériau adsorbant est choisi dans le groupe constitué par l'oxyde d'aluminium activé, les zéolites, les matériaux comportant des mésopores, le tamis moléculaire au carbone et leurs mélanges.

7. Procédé selon l'une des revendications précédentes, dans lequel le noyau interne (C) présente un matériau choisi dans le groupe constitué par les métaux, les oxydes métalliques, les oxydes mixtes, les oxydes céramiques denses tels que la cordiérite, la pérovskite, les argiles frittées telles que le kaolin, l'attapulgite, les silices, les oxydes d'aluminium, la silice-oxyde d'aluminium, la silice-oxyde de magnésium, la silice-oxyde de zirconium, la silice-oxyde de purium, la silice-oxyde de béryllium et la silice-oxyde de titane ainsi que les compositions ternaires telles que la silice-oxyde d'aluminium-oxyde de thorium, la silice-oxyde d'aluminium, l'oxyde de zirconium, et leurs mélanges.

8. Procédé selon l'une des revendications précédentes, dans lequel la première zone (110) et la seconde zone (120) présentent ensemble une longueur de laquelle la première zone comprend 40 à 80 %.

9. Procédé selon l'une des revendications précédentes, dans lequel la première zone (110) est dimensionnée de telle sorte qu'elle correspond à une zone d'équilibre pour l'azote dans l'unité d'adsorption (100) et dans lequel la seconde zone (120) est dimensionnée de telle sorte qu'elle correspond à une zone de transfert de matière pour l'azote dans l'unité d'adsorption (100).

10. Procédé selon la revendication 9, comprenant la détermination expérimentale et/ou par simulation d'une longueur de la zone d'équilibre et d'une longueur de la zone de transfert de matière.

11. Procédé selon l'une des revendications précédentes, dans lequel le premier et/ou le second corps composite sont respectivement sphériques et/ou présentent un diamètre minimal de 2 mm.

12. Procédé selon l'une des revendications précédentes, dans lequel de l'air est utilisé en tant que mélange de charge (E).

13. Procédé selon la revendication 9, dans lequel les première et seconde zones (110, 120) font partie d'une couche d'élimination d'azote (102) qui fait suite à une couche d'élimination d'eau (101) dans l'unité d'adsorption (100).

14. Procédé selon l'une des revendications précédentes, lequel est mis en oeuvre en tant que procédé d'adsorption à pression modulée sous vide.

15. Agencement (10) permettant le traitement d'un mélange de charge (E) contenant de l'azote par adsorption à pression modulée, comportant une unité d'adsorption (100) remplie d'un matériau adsorbant et comportant des moyens conçus pour conduire le mélange de charge temporairement sous pression dans une direction d'écoulement principale à travers l'unité d'adsorption (100), **caractérisé en ce que** le matériau adsorbant est fourni dans une première zone (110) le long de la direction d'écoulement principale principalement ou exclusivement sous la forme de premiers corps d'adsorption (111), **en ce que** le matériau adsorbant est fourni dans une seconde zone (120) se trouvant en aval de la première zone (110) le long de la direction d'écoulement principale principalement ou exclusivement sous la forme de seconds corps d'adsorption (121), **en ce qu'**au moins les seconds corps d'adsorption (121) sont fournis sous la forme de corps composites qui présentent un noyau interne (C) constitué d'un matériau non adsorbant non poreux et une couche externe (S) présentant le matériau adsorbant ou étant formée à partir de celui-ci, **et en ce que** les seconds corps d'adsorption (121) présentent une proportion du matériau adsorbant dans le volume de corps inférieure à celle des premiers corps d'adsorption (111).
